# EUROPEAN PATENT APPLICATION

(11) **EP 3 181 009 A1**
(43) Date of publication of application: **21.06.2017**
(21) Application number: 16166759.7
(22) Date of filing: 23.04.2016
(51) Int. Cl.: A47B 67/04, A47B 91/00

(54) **A FURNITURE ARTICLE WITH AN AREA FOR ALLOCATION OF OBJECTS**

(30) Priority: 17.12.2015 BR 102015031758
(71) Applicant: Trindade de Sousa Monteiro, Luciano, 04565-001 Sao Paulo (BR)
(72) Inventor: Trindade de Sousa Monteiro, Luciano, 04565-001 Sao Paulo (BR)
(74) Representative: Fabry, Bernd

(57) **Abstract**

The present invention relates to a furniture article (10) with an area for allocation of objects, comprising a bottom side section (20), associated to a top side potion (30), the bottom side section (20) and the top side section (30) of the furniture article (10) configuring at least one free back area (21) for putting objects and an upper area (31) for putting objects.

## Description

### FIELD OF INVENTION

The present invention relates to a furniture object, more specifically a moveable drawer chest, for use in the environment of offices and the like, provided with a configuration that enables better utilization of its area for allocation of objects.

### DESCRIPTION OF THE PRIOR ART

The use of drawer chest for storing objects and office documents and the like is relatively common. In general, drawer chests manufactured and sold at present exhibit an one-piece volume of the parallelepiped- or trapeze type, occupied by drawers that may vary in size. The drawers usually face a single side (front) of the chest, so as to facilitate access to all of them.

In short, the chests known so far are limited to a single function of providing a structure and access for support of a plurality of drawers. Although the chest is effective in this regard, it is useful only on one of its sides, the one chosen for access to the drawers. Usually, considering the front side to be the drawer side, the sides, the top and the back of the drawer chest are then areas without utility, since they do not have a configuration adapted for any function other than supporting the drawers.

Moreover, the utility of the drawers is also relative, since the bottom section of the drawers does not exhibit a good use area, chiefly for small objects. Hence the expression "Lost in the bottom of the drawer". Then, one can understand that at presently known drawer chests offer relatively insufficient use of space in this regard.

One observes that in modern offices a quite present concept is the community layout, that is, the one where nobody has a predetermined table or work place, so that people will seat where they deem best for developing their work. In this regard, it is common for employees to put their back-packs or purses on tables, on chairs or on the floor, thus increasing more and more the number of these belongings on the furniture. One can notice that people do not have a near and suitable place to put this type of personal belongings, as well as to place printers and/or other apparatus that are usually placed on tables that might be closer, but out of the work area.

In this type of environment, it is extremely important to make the best use of the whole space and areas available for allocating objects, including personal ones. As already clarified, the presently known drawer chest and often used in these environments, although it does occupy a quite large area below the work table, it does not enable good use of this space, which would be best shared among work folders and areas intended for personal objects such as purses and back-packs and possibly printers or other apparatus of similar volume.

Thus, one cannot observe in the prior art a furniture article such as a drawer chest with castors, which enable good use of all the potentially useful areas of its configuration for putting objects and that will provide good use for the area known as drawer bottom, and which will exhibit, in the front region of easier access, good utilization for small work objects and also for work folders, suspended folders being the most widely used ones.

### OBJECTIVES OF THE INVENTION

Once the problems exhibited by drawer chests with castors known from the prior art having been set forth, the present invention has the objective of presenting a furniture article provided with a configuration that enables better use of useful area, particularly of the area known as "bottom of the drawer" and also with access from the sides and top, and providing space for housing various personal objects, or even office apparatus, personal-use objects, often at the desk, such as printers, etc.

It is an objective of the present invention to provide a furniture article that can extend its useful area during office hours, by means of a sliding or tilting element associated to it.

### BRIEF DESCRIPTION OF THE INVENTION

The present invention relates a furniture article of the type drawer chest with castors, with area for allocation of objects, comprising a bottom side section associated to a top side section, the bottom side section and the top side section configuring at least a free back area for allocation of objects, and an upper area for putting objects. The bottom side section is associated to an expanse arranged adjacent to said at least one back area for allocation of objects. The extension may be a sliding or tilting one.

The furniture article has substantially an "L"-shaped geometry, or alternatively sub-stantially an inverted "T"-shaped geometry, or still an "U"-shaped geometry. The bottom and top side sections have substantially parallelepiped- or trapeze-shaped geometry.

The profile of said at least one back area for putting objects is configured by the difference between depth or height of the bottom and top side sections, and the back area for putting objects has, optionally, at least one support for holding objects or putting accommodation or organization complements.

Further, the back area for putting objects has, optionally, at least one trunk with or without cover for putting objects of accommodation or organization complements. Alternatively, the back area for putting objects has at least one trunk with at least one of the sides or bottom open for putting objects or accommodation or organization complements. The bottom side section and the top side section are integrally associated to a single volume.

The "L"-shaped furniture article comprises at least one back area for putting objects arranged in a back region of the furniture article. Alternatively, in the "T" shape, the furniture article comprises a first back area for putting objects arranged in a back region of the furniture article and a second front area for putting objects arranged in a front region of the furniture article. And further alternatively, in the "U"-shape, the furniture article comprises an intermediate area between the front and the back regions for putting objects.

The bottom and top sections are provided with at least one drawer. The dimensions of said at least one drawer are proportional to the respective bottom and top side sections, so that at least one drawer will occupy the totality of the internal volume of the respective bottom and top side sections.

The upper area for putting objects is arranged in an upper region of the furniture article, said upper region being associated to said at least one expanse arranged adjacent to the upper area for putting objects, and the expanse may be a sliding or tilting one.

### BRIEF DESCRIPTION OF THE DRAWINGS

The present invention will now be described in greater detail with reference to an example of embodiment represented in the drawings. The figures show:
**Figure 1** **-** a perspective front view of the preferred embodiment of the present invention;
**Figure 2** **-** a perspective back view of the preferred embodiment of the present invention with a sliding expanse;
**Figure 3** **-** a perspective front view of the preferred embodiment of the present invention with a tilting expanse;
**Figure 4** **-** a perspective back view of the preferred embodiment of the present invention with a tilting expanse;
**Figure 5** **-** a perspective back view of a preferred embodiment of the present invention with a circular quadrant expanse;
**Figure 6** **-** a perspective back view of the preferred embodiment of the present invention provided with supports;
**Figure 7** **-** a perspective back view of the preferred embodiment of the present invention provided with a removable plate;
**Figure** 8 - a perspective back view of an alternative embodiment of the present invention, provided with a trunk-type access in the back region;
**Figure 9** **-** a perspective back view of the alternative embodiment of the present invention, provided with a trunk-type access with cover in the back region;
**Figure 10** **-** a perspective back view of the alternative embodiment of the present invention with the back bottom open;
**Figure 11** **-** a perspective back view of the alternative embodiment of the present invention with the upper back region open, at the sides and with the upper cover;
**Figure 12** **-** a perspective back view of the alternative embodiment of the present invention with the upper back region, with the side regions closed and with the bottom of the upper region open; and
**Figure 13** **-** a perspective back view of the alternative embodiment of the present invention without presence of the sides.

### DETAILED DESCRIPTION OF THE FIGURES

The furniture article 10 of the present invention exhibits a configuration for a moveable drawer chest, more commonly used in office environments, which enables better use of the useful area known as "bottom of the drawer" for allocating varied objects in various types of environments.

The present invention enables the use of an area that is poorly exploited in present-day drawer chests for accommodating personal objects such as purses, brief cases and back-packs, in an organized manner and without proving detrimental to the decoration of office environments. These objects, which at present do not have an appropriate and organized place to be put at, often remain on chairs, on tables, on the floor below tables, etc.

The present invention also enables better use of present-day and usual drawer chests, preventing waste of space in the environments. The present invention achieves its objectives by arranging the sections 20, 30 that compose it, forming at least one area for putting objects 21, 31, which may be expanded when in use to place a bigger object, as will be seen hereinafter.

In a preferred embodiment, the furniture article 10 is a drawer chest with revolving castors 91. However, it should be noted that this is only a preferred embodiment, so that the furniture article 10 may be a table, a book-shelf, or any other similar piece of furniture.

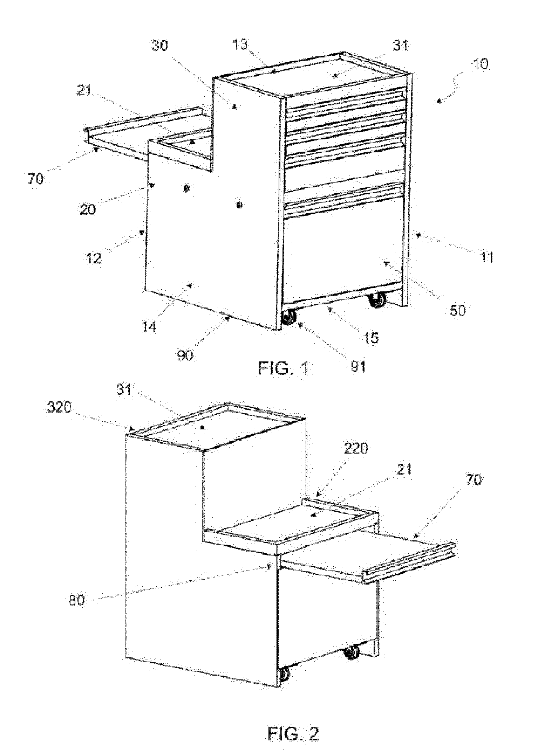

**Figure 1** shows a perspective front view of the preferred embodiment of the furniture article 10 of the present invention. The furniture article 10, in its entirety, may be composed by a wide diversity of materials, as for example, wood, polymers, metal or any other material that is commonly used in making drawer chests according to the practical technique.

The furniture article 10 preferably comprises a first bottom side section 20 and a top side section 30 arranged adjacent to each other, and both of them having preferably a sub-stantially parallelepiped- or trapeze-shaped geometry. The furniture article 10 further comprises, preferably, a conventional drawer chest side in which a cut is made throughout the bottom side section 20, which results in the "L"-shaped view or in the inverted "L"-shaped view as seen from the opposite side.

The furniture article 10 then has the region corresponding to the top side section 30, where the drawers with less depth and more suitable for keeping small personal objects are inserted. Moreover, one observes that the region corresponding to the bottom side section 20, which is perfectly suitable for housing a large drawer for keeping brief cases suspended, including throughout its depth.

For a better understanding of the invention, one defines that the furniture article 10 has a front region 11, a back region 12 opposite the front region 11, a top region 13, two side regions 14 opposite each other and a bottom region 15 below and opposite the top region 13. The regions as defined herein are not imperative to achieve the present invention, and they should be viewed only as illustrative references for clarifying the characteristics to be clarified.

Still in **Figure 1****,** one notices that the surface of the bottom side section 20 has larger dimensions that the surface of the top side section 30, specifically its depth. Thus, one configures a substantially "L"-shaped geometry between the bottom side section 20 and the top side section 30. The "L"-shaped geometry configured by both sections 20, 30 is provided with at least one back area for putting objects 21 and one top area for putting objects 31. Said areas 21, 31 are formed, specifically, by the plane surfaces configured by the "L"-shaped geometry, and they may be as many as the geometry permits and as many as desired.

From the definition of the areas 21, 31, the present invention presents the availability of additional useful areas, that is, the top area for putting objects 31 for putting small work objects like pens, pencils, etc., and the back area for putting objects 21 for accommodating objects like purses, brief cases, and back-packs, and consequently better use of the back region 12, which was poorly used by prior-art drawer tests. Additionally, the area 21 may actually be located at any one of the four faces of the furniture article 10, and represent a front area or a side work area, or still an intermediate are between the opposite faces.

The furniture article 10 of the present invention is further provided with an expanse 70 at the back region 12, which extends the useful support area in the top back open space of the furniture article 10, which in the first embodiment of **Figures 1 and 2** is a sliding element 80, preferably, the sliding element 80 having an end-of-stroke lock, which prevents the expanse 70 from being entirely removed out of the furniture article 10. This expanse 70 may also be extended to the opposite liner extension side, by providing stroke-limiters on it.

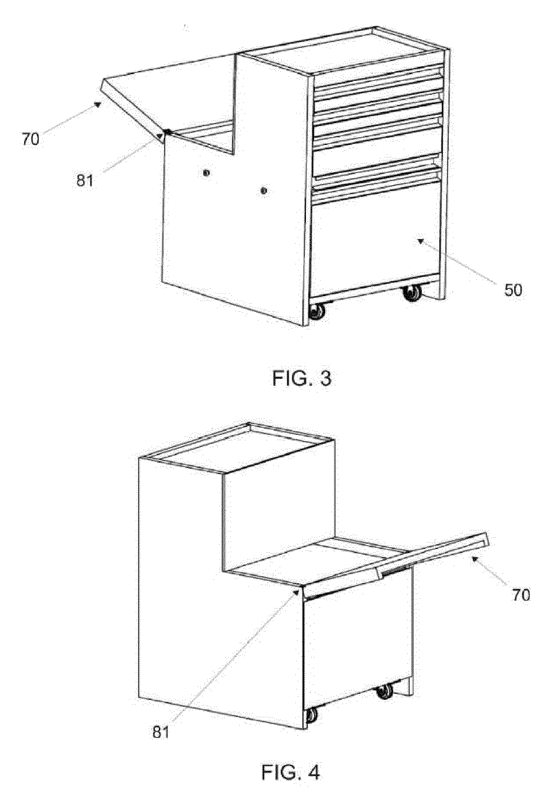

As shown in **Figures 3 and 4****,** the furniture article 10 may alternatively have tilting fitting elements 81. In this case, there is a stroke-limiting lock. Any one of the expanses shown enables one to enlarge the useful area for supporting personal objects. The characteristic of fitting or tilting is important, since, when not in use, this enables it to be retracted, enabling the furniture article 10 to be housed under a table, desk or any other piece of furniture, without detriment to the harmony of the environment.

Thus, besides enabling one to put objects in areas that do not exist in present-day prior-art drawer chests, the present invention still provides the possibility of extending the area for putting personal objects, if desired.

Further, in both embodiments, the bottom side section 20 and the top side section 30 of the furniture article 10 are associated to at least one drawer 50, which is accessible by the front region 11 of the furniture article 10.

The furniture article 10 may comprise a plurality of drawers 50 in its front region 11, the drawers 50 may have either different or equal dimensions. For example, the drawers 50 arranged on the bottom and top side sections 20, 30 may have the same height, depth and length. In another embodiment, the drawers 50 may have only different height, the length and the depth being equal. It should be noted that the length and depth dimensions depend on the dimensions of the bottom side section 20 and top side section 30, so that the latter will not exceed the physical space determined by the furniture article 10. In the opening displacement of the drawers 50, the later are usually opened by the front region 11, but nothing prohibits them from being opened by the side regions 14, or even, by the back region 12, if desired.

In this regard, one observes that the drawers 50 of the bottom side section 20 may have greater depth as compared to the drawers 50 of the top side section 30, since the furniture article 10 has "L"-shaped geometry.

In a preferred embodiment, the bottom side section 20 of the drawer chest is provided with a large-size drawer that occupies the whole internal volume of the bottom side section 20. In this case, it is more adequate to keep brief cases suspended, and the top side section 30 exhibits a plurality of drawers 50 of lower height and shorter depth, the latter occupying the entirety the whole internal volume of the top side section 30.

In the case of the sliding expanse 70, like that one of the first embodiment, it is necessary for the drawer 50 to have a slightly lower height than that of the section, so that it can be possible to associate the expanse 70 to the bottom side section 20.

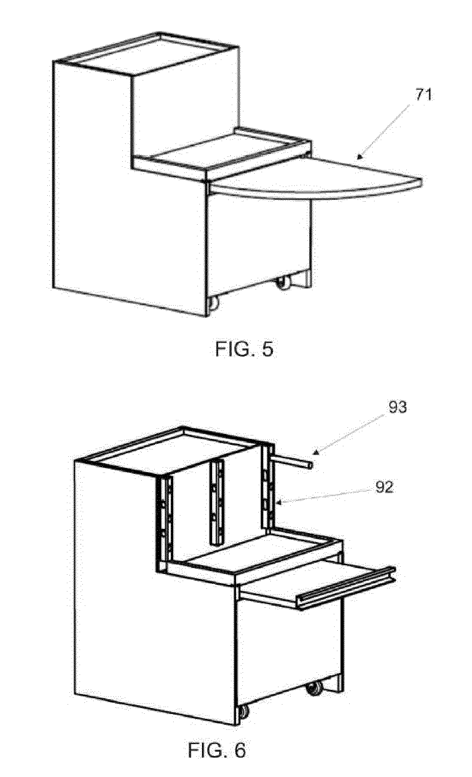

Alternatively, as shown in **Figure 5****,** the furniture article 10 may be provided with a circular quadrant expanse 71 capable of projecting angularly or linearly into or out of the article 10.

**Figure 6** shows that the preferred embodiment of the present invention may comprise adding one or more profiles 92 with parts for fitting small supports 93, which enables one to fit small hooks or supports (not shown) to hold objects or supports for small shelves, other utensils. It is pointed out that the profile/support is also innovatory because it is quite simple, compact and efficient.

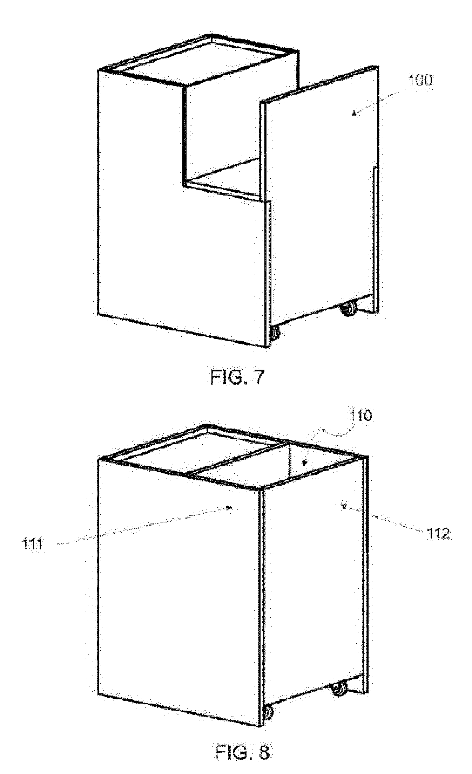

Additionally, the first preferred embodiment of the drawer chest of the present invention may further exhibit, in its back region 12, a removable plate 100, which may be either fixed or movable at the in the back region 12 of the drawer chest, as shown in **Figure 7****.**

The furniture article 10 may further comprise, in its lower region 15, a set of castors. More specifically, the drawer chest may comprise either fixed castors 90 for support and linear displacement of the chest, or revolving casters 91 for support and multidirectional displacement, or still a combination thereof. Finally, the back and top areas for putting objects 21, 31 may comprise, in its external limits, a set of flaps 220, 320 for better accommodating and keeping the positioning of the objects.

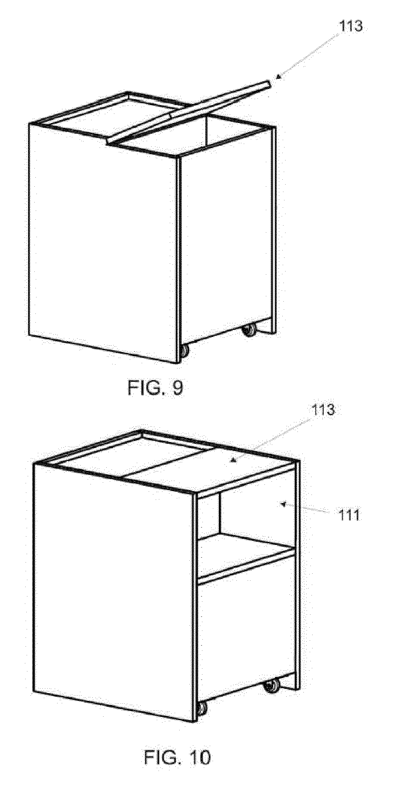

In an alternative embodiment of the present invention, shown in **Figure 8****,** the back area for putting objects 21 has a trunk 110 for putting objects, formed by side plates 111 and a bottom 112. Alternatively, as shown in **Figure 9****,** the trunk 110 may be provided with a cover 113.

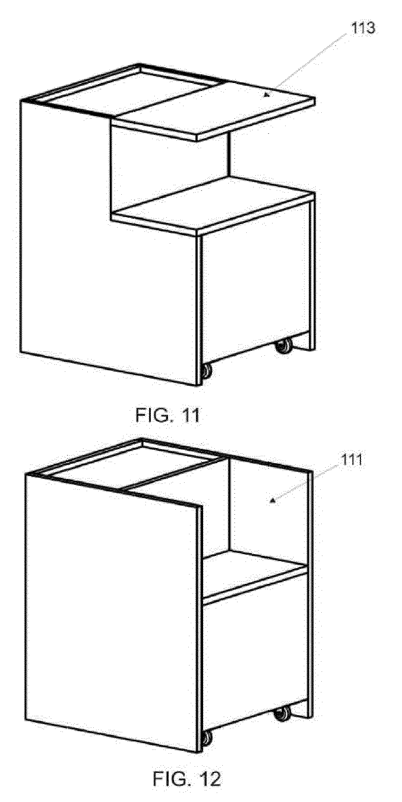

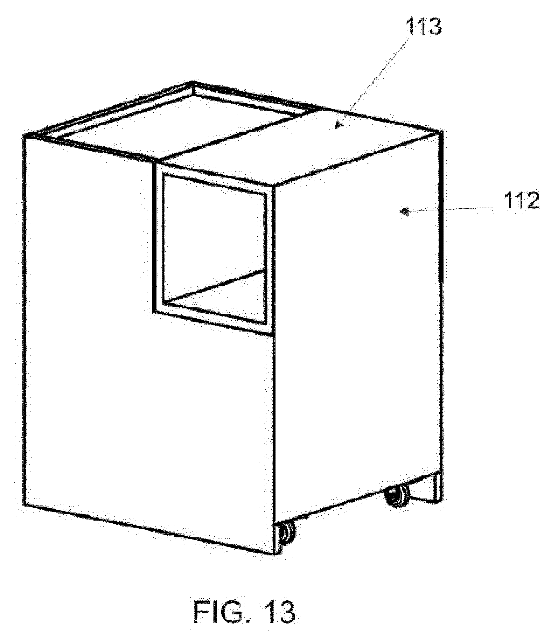

**Figures 10****,** **11****,** **12** **and** **13** show different arrangements of the alternative embodiment of figure 8, showing the trunk without a bottom 112 **(****Figure 10****),** without the side walls 111 and bottom 112 **(****Figure 11****),** with only the side walls 111 **(****Figure 12****)** and with the cover 113 and bottom **(****Figure 13****).**

Further, in an alternative embodiment, the present furniture article 10 may have an inverted "T"-shaped geometry (not shown), so that it will comprise two areas, a back one for putting objects 21 and a front one, besides the top area for putting objects 31. In this case, one of the areas is formed in the front region 11 of the furniture article 10, the area 21 being formed in the back region 12 of the furniture article 10 and the area 31 being formed in the top region 13 of the furniture article 10. One observes that the upper region 13 may also be associated to said at least one expanse 70, which is arranged adjacent to the upper arear for putting objects 31, the expanse 70 may also be a sliding or tilting one, as described before, and still another alternative embodiment, the present furniture article 10 may exhibit a "U"-shaped geometry (not shown), so that it will comprise an intermediate area for putting objects 21. In this case, the front and back areas are formed by the top side section 30 and the area for putting objects is intermediate between them.

In these alternative embodiments, the drawers 50 will be arrange preferably between the respective bottom side sections 20, arranged in the front and back regions 11, 12, the respective top side sections 30 housing the respective areas 21. The latter, as well as in the preferred embodiment, may exhibit an expanse 70, associated to a sliding element 80 or a tilting element 81.

A preferred example of embodiment having been described, it should be understood that the scope of the present invention embraces other possible variations, being limited only by the contents of the accompanying claims, which include the possible equivalents.

## Claims

1. A furniture article (10) with an area for allocation of objects, comprising a bottom side section (20), associated to a top side section (30), the furniture article (10)
**characterized in that**
the bottom side section (20) and the top side section (30) configure at least one free back area (21) for putting objects and at least one upper area (31) for putting objects.

2. The furniture article (10) according to claim 1, **characterized in that** the bottom side section (20) is associated to a sliding expanse (70), arranged adjacent to said at least one back area (21) for putting objects.

3. The furniture article (10) according to claim 1, **characterized in that** it comprises a substantially L-shaped geometry.

4. The furniture article (10) according to claim 1, **characterized in that** it comprises a substantially inverted-T-shaped geometry.

5. The furniture article (10) according to claim 1, **characterized in that** it comprises a substantially U-shaped geometry.

6. The furniture article (10) according to claim 1, **characterized in that** the bottom (20) and top (30) side sections have substantially parallelepiped-shaped geometry.

7. The furniture article (10) according to claim 1, **characterized in that** the bottom (20) and top (30) side sections have substantially trapeze-shaped geometry.

8. The furniture article (10) according to claim 1, **characterized in that** the profile of said at least one back area (21) for putting objects is configured by the difference between the depth and the height of the bottom (20) and top (30) side sections.

9. The furniture article (10) according to claim 1, **characterized in that** the back area (21) for putting objects has at least one support for holding objects or putting accommodation or organization complements.

10. The furniture article (10) according to claim 1, **characterized in that** the back area (21) for putting objects has at least one trunk (110) with or without a cover (113) for putting objects of accommodation or organization complements.

11. The furniture article (10) according to claim 1, **characterized in that** the back area (21) for putting objects has at least one trunk (110) with at least one of the side walls (111) or bottom (112) open for putting objects or accommodation or organization complements.

12. The furniture article (10) according to claim 1, **characterized in that** the back area (21) for putting objects has at least one trunk (110) with at least one of the sidewalls (111) and/or cover (113) open for putting objects or accommodation or organization complements.

13. The furniture article (10) according to claim 2, **characterized in that** the expanse (70) is an in-fitting and sliding one.

14. The furniture article (10) according to claim 2, **characterized in that** the expanse (70) is a pivoting and fitting one at a peripheral point of the article (10).

15. The furniture article (10) according to claim 2, **characterized in that** the expanse (70) is a tilting and fitting one.

16. The furniture article (10) according to claim 1, **characterized in that** the bottom (20) and the top (30) side sections are integrally associated in a single volume.

17. The furniture article (10) according to claim 3, **characterized in that** it comprises only one back area (21) for putting objects, arranged in a back region (12) of the furniture article (10).

18. The furniture article (10) according to claim 4, **characterized in that** it comprises a first back area (21) for putting objects, arranged in a back region (12) of the furniture article (10) and a frontal second area for allocating objects in a front region (11) of the furniture article (10).

19. The furniture article (10) according to claim 3, **characterized in that** the bottom and top side sections (20, 30) are provided with at least one drawer (50).

20. The furniture article (10) according to claim 4, **characterized in that** the top side section (30) is provided with at least one drawer (50).

21. The furniture article (10) according to any one of claims 17 and 18, **characterized in that** the dimensions of said at least one drawer (50) are proportional to the respective bottom and top side sections (20, 30), so that said at least one drawer (50) occupies the whole internal volume of the respective bottom and top side sections (20, 30).

22. The furniture article (10) according to claim 1, **characterized in that** the upper area (31) for putting objects is arranged in an upper region (13) of the furniture article (10).

23. The furniture article (10) according to claim 20, **characterized in that** the upper region (13) of the furniture article (10) is associated to said at least one expanse (70) arranged adjacent to the upper area (31) for putting objects.

24. The furniture article (10) according to claim 23, **characterized in that** the expanse (70) is a sliding and/or a fitting one.

25. The furniture article (10) according to claim 23, **characterized in that** the expanse (70) is a tilting and/or a fitting one.

26. The furniture article (10) according to claim 1, **characterized in that** the back area (21) for putting objects houses complements of the type known organization items.

27. The furniture article (10) according to claim 1, **characterized in that** the back area (21) for putting objects houses complements of the type organization items that area developed preferably for this area and this context.
